# EUROPEAN PATENT SPECIFICATION

(11) **EP 4 341 586 B1**
(45) Date of publication and mention of the grant of the patent: **06.05.2026**
(21) Application number: 22805697.4
(22) Date of filing: 17.05.2022
(51) Int. Cl.: F01M 1/08, F16N 7/14, F16N 7/34, B05B 1/14, F16N 21/06, F16H 57/04, B05B 1/04

(54) **FLUID SPRAYERS FOR POWERTRAINS AND MANUFACTURING METHODS FOR THE SAME**
FLÜSSIGKEITSSPRÜHER FÜR ANTRIEBSSTRANG UND HERSTELLUNGSVERFAHREN DAFÜR
PULVÉRISATEURS DE FLUIDE POUR GROUPES MOTOPROPULSEURS ET LEURS PROCÉDÉS DE FABRICATION

(30) Priority: 19.05.2021 US 202163190295 P
(43) Date of publication of application: 27.03.2024
(73) Proprietor: Cummins, Inc., Columbus, Indiana 47201 (US); Achates Power, Inc., San Diego, CA 92121 (US)
(72) Inventor: HOYE, Robert Earl, Columbus, Indiana 47201 (US)
(74) Representative: Cleveland Scott York
(86) International application number: PCT/US2022/072359
(87) International publication number: WO 2022/246394

(56) References cited:
- EP-A1- 3 486 443
- WO-A1-2017/186701
- DE-A1- 102008 004 999
- US-A1- 2008 276 975
- US-A1- 2012 222 761
- US-A1- 2012 222 761
- US-A1- 2018 156 192
- US-A1- 2018 347 685
- US-A1- 2018 347 685
- US-A1- 2020 032 895
- US-A1- 2020 132 184

## Description

The present invention relates generally to powertrains, and more particularly, but not exclusively, to fluid sprayers for the same and manufacturing methods for fluid sprayers.

### BACKGROUND

Fluid sprayers are fundamental to the operation of reliable, well lubricated and cooled components of powertrains. For example, gear sprayers can be used to provide a constant supply of oil, directly or indirectly, to a gear mesh of the powertrain. In another example, piston cooling nozzles can be used to spray oil for piston cooling and lubrication of an internal combustion engine.

Traditional approaches to manufacturing fluid sprayers often involve the assembly brazing of multiple individual parts to form the fluid sprayer. Additionally, fluid sprayers may be limited in design to nozzles having a cylinder jet due to manufacturability issues. The cylindrical jetted orifice of such nozzles creates a jet stream of oil that is focused on a localized area, and may provide inadequate fluid distribution when sprayed.

EP3486443A1 describes an oil spraying system for use in an engine for spraying directly onto a piston or cylinder wall. The system includes a supply line having at least one nozzle and at least one outlet on the nozzle. The nozzle and/or outlet is configurable to provide a predetermined spray direction or pattern.

There are many solutions to directing oil and other fluids to powertrain components. For example, there are indirect means of splashing or misting of neighboring components in oil. Some direct means include machined bores in the engine block or other casting; fluid supply tubes which may need to be vent, swaged, welded, or brazed onto a separate turned piece; and machined grooves and/or channels in components that are directed to the location to be sprayed. However, these solutions also may provide inadequate fluid distribution to the desired locations of the powertrain. Therefore, there remains a substantial need for fluid sprayers of the present invention.

For the purposes of clearly, concisely and exactly describing illustrative embodiments of the present invention, the manner, and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created and that the invention includes and protects such alterations, modifications, and further applications of the exemplary embodiments as would occur to one skilled in the art.

### SUMMARY

According to one aspect of the present invention there is provided a fluid sprayer according to claim 1.

Preferred features of the present invention are recited in the dependent claims.

The present invention includes fluid sprayers for powertrains. The fluid sprayers can distribute oil or other fluid to one or more powertrain components, such as an engine component or a transmission component.

In an embodiment, the fluid sprayer includes a unitary body. The unitary body includes a fluid passage therein that extends from an inlet at a first end of the unitary body to a nozzle at or near a second end of the unitary body opposite the first end. The fluid sprayer includes a mounting portion at the first end of the unitary body opposite the second end. The mounting portion is configured to connect the fluid sprayer with a fluid system of the internal combustion engine. The unitary body includes a number of bends between the nozzle and the mounting portion.

In an embodiment, the fluid sprayer includes a unitary body with an elongated sidewall forming a fluid passage therein, a mounting portion at a first end of the unitary body, and a nozzle proximate to a second end of the unitary body that is opposite the first end. The fluid passage extends from the mounting portion to the nozzle. The fluid passage is defined by an inner surface of the sidewall. The nozzle is defined by an undercut in the inner surface of the sidewall and an elongated opening in the sidewall in fluid communication with the undercut.

In an embodiment, the fluid sprayer includes a unitary body including an elongated sidewall. The elongated sidewall defines a fluid passage in the unitary body. The unitary body extends between a first end and an opposite second end. A mounting portion is at the first end of the unitary body, and a nozzle is proximate to the second end of the unitary body. The fluid passage extends from the mounting portion to the nozzle. The nozzle includes at least a first orifice and a second orifice. The first orifice is configured to produce a first fluid output and the second orifice is configured to produce a second fluid output that differs from the first fluid output

In an embodiment, a method of manufacturing the fluid sprayers herein includes depositing a layer of additive material and fusing at least a portion of the additive material to form the fluid sprayer.

In an embodiment, the unitary body includes at least one bend that is additively manufactured along the unitary body along with a fluid passage in the unitary body that extends between a mounting portion at a first end of the unitary body and a nozzle proximate to a second end of the unitary body.

In an embodiment, the unitary body includes at least one additively manufactured orifice that is in fluid communication with a fluid passage of the unitary body.

This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

FIG. 1 is a schematic diagram illustrating certain aspects of an example powertrain that includes fluid sprayers for components of the powertrain.
FIG. 2 is a perspective view illustrating one embodiment of a fluid sprayer according to the present invention.
FIG. 3 is a perspective view illustrating another embodiment of a fluid sprayer according to the present invention.
FIG. 4 is a longitudinal section view of another embodiment fluid sprayer according to the present invention.
FIG. 5 is a perspective view of another embodiment fluid sprayer according to the present invention.
FIG. 6 is a schematic view of another embodiment fluid sprayer according to the present invention.
FIG. 7 is a flow diagram illustrating an embodiment of a method for manufacturing a fluid sprayer according to the present invention.

### DETAILED DESCRIPTION

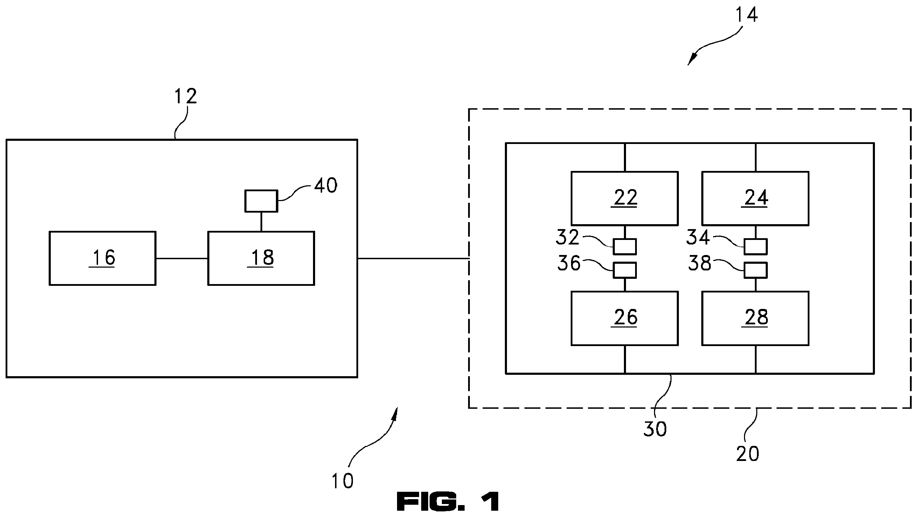

Referring to FIGs. 1-6, fluid sprayers 100, 200, 300, 400, 500 for a powertrain 10 are provided. Fluid sprayers 100, 200, 300, 400, 500 receive fluid from a fluid system 30 of powertrain 10 and spray lubrication fluid at one or more of the engine components 22, 24, 26, 28 and/or at one or more of the transmission components 16, 18.

In an embodiment, a fluid sprayer 100, 200, 400 for powertrain 10 includes a unitary body 104, 204, 404 with a fluid passage 106, 206, 406 therein that extends from an inlet 105, 205, 405 at a first end 108, 208, 408 of the unitary body 104, 204, 404 to a nozzle 114, 214, 414 at or near a second end 110, 210, 410 of the unitary body 104, 204, 404 opposite the first end 108, 208, 408. The fluid sprayer 100, 200, 400 includes a mounting portion 112, 212, 412 at the first end 108, 208, 408 of the unitary body 104, 204, 404. The mounting portion 112, 212, 412 is configured to connect the fluid sprayer 100, 200, 400 to fluid system 30 of the powertrain 10. The unitary body 104, 204, 404 includes a number of bends 116, 118, 216, 218, 416, 418 between the nozzle 114, 214, 414 and the mounting portion 112, 212, 412.

In an embodiment, a fluid sprayer 300 for powertrain 10 includes a unitary body 304 with an elongated sidewall 302. Elongated sidewall 302 includes an inner surface 305 that defines a fluid passage 306 in unitary body 304. Unitary body 304 extends between a first end 308 and an opposite second end 310. Fluid sprayer 300 includes a mounting portion 312 at first end 308 of the unitary body 304, and a nozzle 320 proximate to second end 310 of the unitary body 304. The fluid passage 306 extends from the mounting portion 312 to the nozzle 320. The nozzle 320 includes an orifice 324 defined by a depression 322 in the inner surface 305 of the sidewall 302 and an elongated opening 326 in the sidewall 302 in fluid communication with the depression 322.

In an embodiment, a fluid sprayer 500 for powertrain 10 includes a unitary body 504 with an elongated sidewall 502. The elongated sidewall 502 defines a fluid passage 506 in the unitary body 504. The unitary body 504 extends between a first end 508 and an opposite second end 510. A mounting portion 512 is provided at the first end 508 of the unitary body 504. Unitary body 504 includes a nozzle 520 proximate to the second end 510 of the unitary body 504. The fluid passage 506 extends from the mounting portion 512 to the nozzle 520. The nozzle 520 includes at least a first orifice 530 and a second orifice 532. The first orifice 530 is configured to produce a first fluid output and the second orifice 532 is configured to produce a second fluid output that differs from the first fluid output.

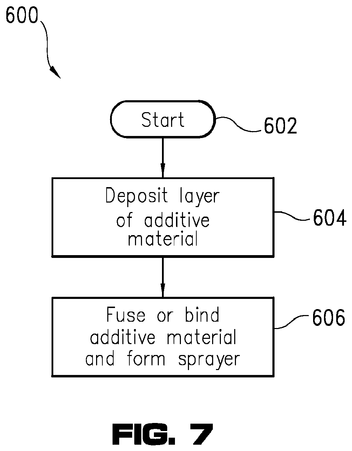

In an embodiment, method 600 in FIG. 7 for manufacturing a fluid sprayer 100, 200, 300, 400 is provided. The method 600 includes depositing layers of additive material at operation 602, and fusing or binding at least a portion of the additive material at operation and form the unitary body 104, 204, 304, 404 of fluid sprayer 100, 200, 300, 400.

In an embodiment of method 600, the unitary body 104, 204, 404 includes at least one bend 116, 118, 216, 218, 416, 418 that is additively manufactured along the unitary body 104, 204, 404 along with a fluid passage 106, 206, 406 in the unitary body 104, 204, 404 that extends between a mounting portion 112, 212, 412 at a first end 108, 208, 408 of the unitary body 104, 204, 404 and a nozzle proximate to a second end 110, 210, 410 of the unitary body 104, 204, 404.

In an embodiment of method 600, the unitary body 304, 504 includes at least one additively manufactured orifice 324, 530, 532 that is in fluid communication with a fluid passage 306, 506 of the unitary body 304, 504.

Referring to FIG. 1, there is illustrated an example powertrain 10 for a vehicle (not shown) or stationary application such as a genset (not shown). The powertrain 10 includes a transmission 12 and/or a power source such as an internal combustion engine system 14. The transmission 12 may include a plurality of components 16, 18 generally found in a transmission such as a torque converter, clutch, gearbox, etc. The internal combustion engine system 14 may include an engine 20 comprising a plurality of components 22, 24, 26, 28 generally found in an engine such as cylinders, pistons, bearings, valve trains, gears, crankshafts, turbines, etc. The powertrain 10 also includes a fluid system 30 to circulate a lubrication fluid to one or more of the engine components 22, 24, 26, 28 and/or to one or more of the transmission components 16, 18.

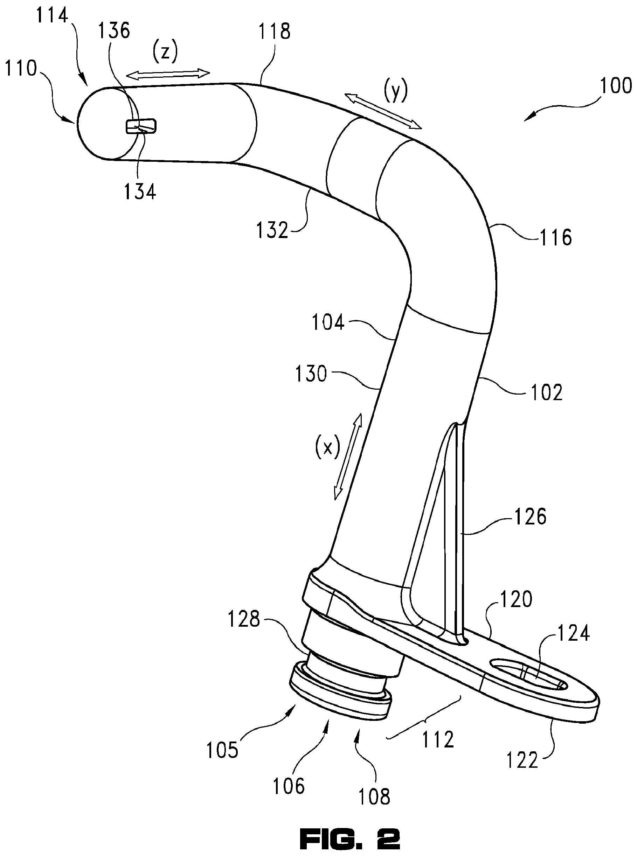

In an example embodiment, the fluid system 30 may include one or more fluid sprayers such as sprayers 32, 34, 36, 38 to spray fluid on one or more engine components. In some embodiments, the sprayer 32 may include a nozzle with one or more spray orifices to direct fluid in a plurality of directions and/or to produce one or more fluid outputs. The fluid system 30 may also include one or more fluid sprayers to spray fluid on one or more transmission components. For example, the transmission 12 may include fluid sprayer 40 to spray fluid directly on a surface of gears in a gearbox located in the transmission 12. Further details for one or more embodiments for one or more of the sprayers 32, 34, 36, 38, 40 are shown in FIGs. 2-6 with respect to fluid sprayers 100, 200, 300, 400, 500.

With reference to FIG. 2, there is illustrated an example fluid sprayer 100 for powertrain 10. The fluid sprayer 100 may spray fluid, such as oil, on one or more powertrain components, such as cylinders, pistons, bearings, valve trains, gears, crankshafts, turbines, and/or gear meshes, as discussed above with respect to powertrain 10.

In the illustrated embodiment, the fluid sprayer 100 includes a unitary body 104 having a sidewall 102 extending therealong. Sidewall 102 forms a fluid passage 106 in unitary body 104. The fluid passage 106 provides a flow path that allows fluid, such as oil, to flow from an inlet 105 at a first end 108 of the body 104 to a second end 110 of the body 104.

In the illustrated embodiment, the unitary body 104 includes an outer cross-section that varies in size and/or shape along a portion of the length of body 104 between the first end 108 and the second end 110. In one embodiment, the outer cross-section of unitary body 104 is configured to taper in a direction from the first end 108 toward the second end 110 along at least a portion of a length of the body 104. In one embodiment, passage 106 is tapered along all or a portion of its length from first end 108 to second end 110. In other embodiments, the unitary body 104 and/or fluid passage 106 may include a diameter that is the same from the first end 108 toward the second end 110.

In the example embodiment, the fluid sprayer 100 includes a nozzle 114 on sidewall 102 proximate to the second end 110 of the body 104 opposite the first end 108. The fluid passage 106 is closed by the second end 110 of the unitary body 104 so that fluid flow is directed through nozzle 114.

A mounting portion 112 is located at the first end 108 opposite the second end 110 to facilitating mounting fluid sprayer 10 with fluid passage 106 in fluid connection with fluid system 30 of powertrain 10. The mounting portion 112 includes a flange 120 integrally formed with body 104 that extends in a lateral direction away from the body 104. The flange 120 may be configured with a mounting surface 122 and a through-hole 124. The through-hole 124 provided in the flange 120 can receive a fastener to mount fluid sprayer 100 to powertrain 10. A fillet 126 connects the flange 120 and the body 104 for better rigidity with the assembly to the powertrain 10. The mounting portion 112 may include a circumferential groove 128 for receiving a sealing ring, such as an O-ring (not shown). The groove 128 may be machined into mounting portion 112, or formed during an additive manufacturing process.

The unitary body 104 includes a number of bends between the mounting portion 112 and the nozzle 114. For example, the unitary body 104 may include at least a first bend 116 and a second bend 118. However, other embodiments contemplated any number of bends. The body 104 also includes a number of body portions between the first end 108 and the second end 110. For example, the body 104 includes a first body portion 130, a second body portion 132, and a third body portion 134.

The first body portion 130 may include the mounting portion 112 formed integrally therewith, or the mounting portion 112 could be attached to first portion 130. First body portion 130 extends from the mounting portion 112 to the first bend 116 of the body 104. The second body portion 132 extends from the first bend 116 to the second bend 118. The third body portion 134 extends from the second bend 118 to the second end 110. The third portion 134 includes the nozzle 114.

The first body portion 130 extends in a first direction (x), the second body portion 132 extends in a second direction (y), and the third body portion 134 extends in a third direction (z). In the illustrated embodiment, the first body portion 130 extending in the first direction (x) is orthogonal to second portion 132 extending in the second direction (y). The third body portion 134 extends in the third direction (z), and is orthogonal to the first body portion 130 extending in direction (x) and/or the second portion 132 extending in the second direction (y). However, non-orthogonal orientations between two or more of the body portions 130, 132, 134 are also contemplated.

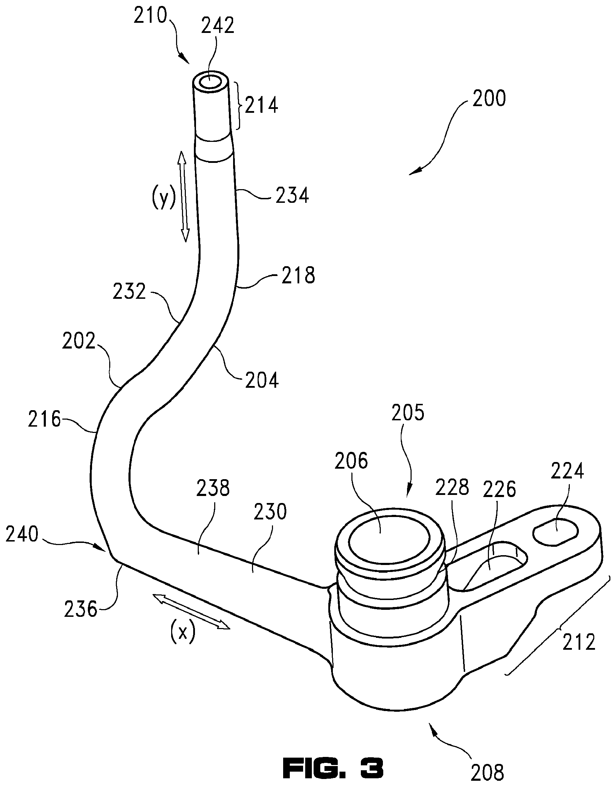

In the illustrated embodiment, the nozzle 114 is configured to generate a fan-shaped spray of fluid from the fluid system 30 to the targeted component. In one embodiment, the nozzle 114 includes an elongated opening 136 in sidewall 102 that extends along a portion of the length of third body portion 134. For example, the elongated opening 136 may extend in the direction (z) along an axis that is parallel to longitudinal axis of the third body portion 134. Further details of an embodiment of nozzle 114 are shown and discussed with respect to nozzle 320 of FIG. 3. However, other configurations for nozzle 114 are also contemplated, including those that include a plurality of orifices to spray fluid in multiple directions.

The fluid sprayer embodiments illustrated in FIGS. 3-5 include a number of features and aspects which are the same as or similar to the features of the fluid sprayer 100. It shall be appreciated that the fluid sprayer embodiments illustrated in FIGS. 3-5 also include features that differ from fluid sprayer 100 and with respect to one another as evident from the description that follows.

With reference to FIG. 3, another fluid sprayer embodiment is illustrated as fluid sprayer 200. Fluid sprayer 200 includes a unitary body 204 having a sidewall 202 extending along body 204. Sidewall 202 forms a fluid passage 206 therein. The fluid passage 206 extends from an inlet 205 at a first end 208 of the body 204 to a second end 210. The fluid sprayer 200 includes a nozzle 214 at the second end 210. In the illustrated embodiment, nozzle 214 includes an axially located end opening 242 at second end 210.

The fluid sprayer 200 also includes a mounting portion 212 at the first end 208 opposite the second 210. The mounting portion 212 is configured to mount fluid passage 206 in fluid connection with the fluid system 30 of powertrain 10. The mounting portion 212 includes a flange 220 that is integral with body 204 and extends away from the body 204. The flange 220 includes a mounting surface 222, and a through-hole 224 can be provided on the flange 220 for receiving a fastener to engage the powertrain 10. The flange 120 may include a recess 226 near the through-hole 224 for weight reduction and/or to accommodate a projection or other feature on the surface to be mounted. The mounting portion 212 includes a circumferential groove 228 for receiving a sealing ring.

The body 204 includes a number of bends between the mounting portion 212 and the second end 210. For example, the body 204 includes at least a first bend 216 and a second bend 218. The body 204 also includes a number of body portions between the first end 208 and the second end 210. For example, the body 204 includes first body portion 230, second body portion 232, and third body portion 234.

The first body portion 230 extends from the mounting portion 212 to the first bend 216. The first body portion 230 includes a bottom portion 236 having a flat surface 236 that extends from the mounting portion 212 to the first bend 216. The flat surface 236 can provide support of body 204 during manufacturing and also increase stiffness of body 204. A top portion 238 of the first body portion 230 includes a rounded surface opposite bottom portion 236 that is integrally formed with the bottom portion 236. The top portion 238 extends along a parallel direction with the bottom portion 236 and extends from the mounting portion 212 to the first bend 216. The first body portion 230 is configured with a tapered outer shape 240 such that the outer cross-section of body 204 varies in size along first body portion 230. In one embodiment, the size decreases or tapers in a direction toward second end 210 along first body portion 230

The second body portion 232 is configured to extend along a large radius between body portions 230, 234 to reduce flow losses from the first bend 216 to the second bend 218. The third body portion 234 extends from the second bend 218 to the second end 210. The first body portion 230 is configured to extend in a first direction (x) that is perpendicular to a second direction (y) in which the third body portion 234 extends. In the example embodiment, the nozzle 214 and/or end opening 242 is configured to supply fluid from the fluid system 30 to the component(s) to be sprayed.

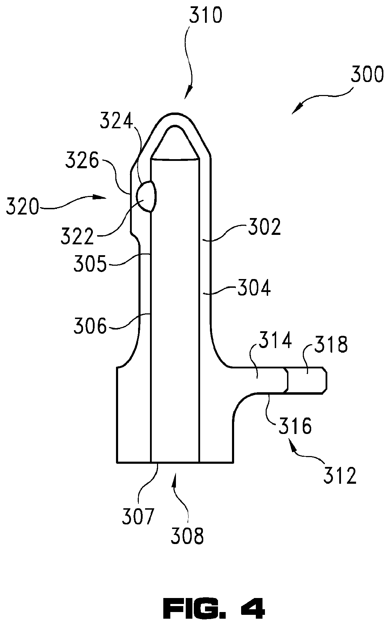

With reference to FIG. 4, there is illustrated a cross-section of another embodiment fluid sprayer 300. Fluid sprayer 300 includes a unitary body 304 having a sidewall 302. Sidewall 302 includes an inner surface 305 forming a fluid passage 306. The fluid passage 306 provides a flow path that allows fluid to flow from inlet 307 at a first end 308 of the body 304 to a second end 310 of the body 304. In the illustrated embodiment, unitary body 204 is linear from first end 308 to second end 310.

A mounting portion 312 is located at the first end 308 opposite the second end 310. The mounting portion 312 is configured to mount fluid sprayer 300 with fluid passage 306 in fluid connection with the fluid system 30 of the powertrain 10. The mounting portion 312 includes a flange 314 integral with body 304 that extends in a lateral direction away from the body 304. The flange 314 may be configured with a mounting surface 316 and a through-hole 318 for receiving a fastener through the flange 314 for mounting to the powertrain 10.

In this example embodiment, the sprayer 300 includes a nozzle 320 in sidewall 302 proximal to the second end 310 of the body 304 opposite the first end 308. The nozzle 320 includes a protrusion 330 extending laterally outwardly from sidewall 302. Protrusion 330 includes an elongated opening 326 extending through an outer side of protrusion 330. In an embodiment, the elongated opening 326 is formed by a slot extending along a length of protrusion 330.

The nozzle 320 also includes an undercut or depression 322 formed in the inner surface 305 of the sidewall 302. Depression 322 is semi-spherical in shape. An orifice 324 extending through sidewall 302 at protrusion 330 is formed at the intersection of the depression 322 and the opening 326. The fluid is sprayed from passage 306 through orifice 324 and into the elongated opening 326 where it is distributed or fanned out linearly along the protrusion 330 by opening 326. The configuration of nozzle 320 provides a fan spray pattern for better distribution of fluid over the engine components than what can be provided by a circular orifice.

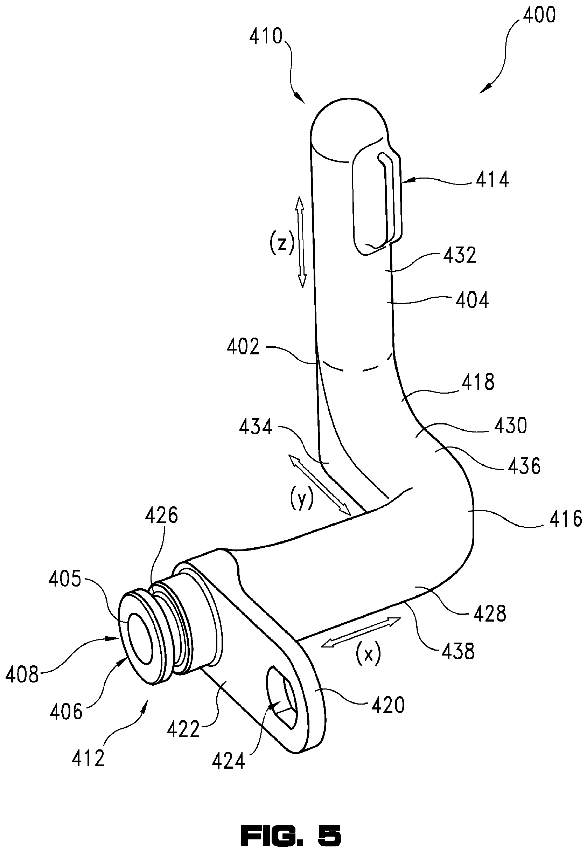

With reference to FIG. 5, there is illustrated an embodiment of a fluid sprayer 400. Fluid sprayer 400 includes a unitary body 404 having a sidewall 402 extending therealong. The sidewall 402 forms a fluid passage 406 therein. The fluid passage 406 extends from an inlet 405 at a first end 408 of the body 404 to a second end 410 of the body 404.

The fluid sprayer 400 also includes a mounting portion 412 at the first end 408 opposite the second 410. In the illustrated embodiment, the fluid sprayer 400 includes a nozzle 414 proximate to the second end 410 opposite the first end 408. It shall be appreciated that the nozzle 414 may the same as or similar to the nozzle 320 in FIG. 4. However, other embodiments for nozzle 414 are also contemplated, such as a plurality of orifices that spray fluid in multiple directions.

The mounting portion 412 includes a flange 420 integral with unitary body 404 that extends in a lateral direction away from the body 404. The flange 420 may be configured with a mounting surface 422 and a through-hole 424. A fastener (not shown) can be provided in through-hole 424 for mounting fluid sprayer 400 to the powertrain 10. The mounting portion 412 may include a circumferential groove 426 for receiving a sealing ring at the first end 408.

The body 404 includes a number of bends (e.g., a first bend 416 and a second bend 418) between the mounting portion 412 and the nozzle 414. The body 404 also includes a number of body portions between the first end 408 and the second end 410. For example, the body 404 may include a first body portion 428, a second body portion 430, and a third body portion 432. The first body portion 428 includes the mounting portion 412 and extends from the mounting portion 412 to the first bend 416. The second body portion 430 extends from the first bend 416 to the second bend 418. The third body portion 432 extends from the second bend 418 to the second end 410.

The first body portion 428 extends in a first direction (x), the second body portion 430 extends in a second direction (y), and the third body portion 432 extends in a third direction (z). In the illustrated embodiment, the first body portion 428 extends in the first direction (x) and is configured to be orthogonal to the second body portion 430, and first direction (x) is orthogonal to second direction (y). The third body portion 432 extends orthogonal to first and second body portions 428, 430, and the third direction (z) is orthogonal to the first direction (x) and the second direction (y). Non-orthogonal orientations between two or more of the body portions 428, 430, 432 are also contemplated in other embodiments.

The first body portion 428 and/or the second body portion 430 includes a bottom portion 434 having a flat surface 438 that extends therealong. The flat surface(s) 438 can provide support of body 404 during additive manufacturing and also increase a stiffness of body 404. A top portion 436 of the second body portion 430 includes a rounded surface extending from the bottom portion 434 opposite flat surface(s) 438. The top portion 436 extends along a parallel direction with the bottom portion 434 and extends from the first bend 416 to the second bend 418.

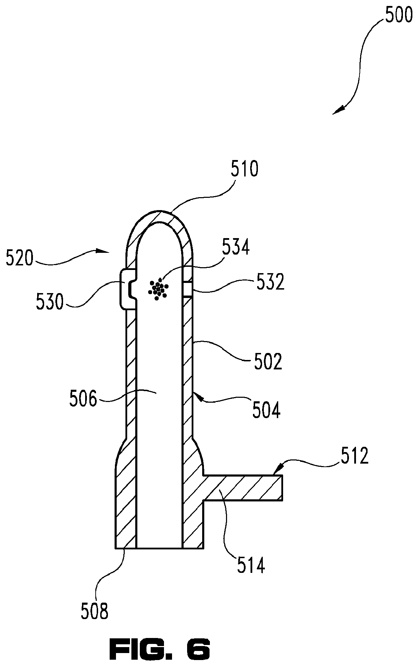

With reference to FIG. 6, there is illustrated an embodiment of a fluid sprayer 500. Fluid sprayer 500 includes a unitary body 504 having a sidewall 502 extending therealong. The sidewall 502 forms a fluid passage 506 in body 504. The fluid passage 506 extends from an inlet 505 at a first end 508 of the body 504 to a second end 510 of the body 504.

The fluid sprayer 500 also includes a mounting portion 512 at the first end 508 opposite the second 510. The mounting portion 512 includes a flange 514 integral with unitary body 504 that extends in a lateral direction away from the body 504. The mounting portion 512 and/or flange 514 may be configured according to any fluid sprayer embodiment disclosed herein.

In the illustrated embodiment, the fluid sprayer 500 includes a nozzle 520 proximate to the second end 510 opposite the first end 508. The fluid passage 506 extends from the mounting portion 512 to the nozzle 520. The nozzle 520 includes at least a first orifice 530 and a second orifice 532. The first orifice 530 is configured to produce a first fluid output and the second orifice 532 is configured to produce a second fluid output that differs from the first fluid output.

In an embodiment, nozzle 520 includes more than two orifices 530, 532, such as a third orifice 534, or even more than three orifices. First orifice 530 can be, for example, an elongate opening in sidewall 502, second orifice 532 an be a cylindrical opening in sidewall 502, and third orifice 534 can be a plurality of small holes in sidewall 502. The two or more orifices 530, 532, 534 are configured to provide different fluid outputs depending on the component being sprayed and the desired fluid distribution. For example, orifice 530 can be configured to produce a fluid output that is a first spray pattern and second orifice 532 can produce a fluid output that is a second, different spray pattern. Third orifice 534 can be configured to provide a third spray pattern. Example spray patterns include jet spray patterns, fan spray patterns, drip spray patterns, and mist spray patterns, to name a few.

In another example, orifice 530 can be configured to produce a fluid output that is a first fluid flow rate and second orifice 532 can produce a fluid output that is a second, different fluid flow rate. In another example, orifice 530 can be configured to produce a fluid output that is a first fluid velocity and second orifice 532 can produce a fluid output that is a second, different fluid flow velocity. Orifices 530, 532, 534 can be oriented in the same direction or in different directions, depending on the location of the component in which the fluid output therefrom is to applied. Orifices 530, 532, 534 can be located at or adjacent second end 510, or spaced along a length of unitary body 504.

The exemplary embodiments of the fluid sprayers 100, 200, 300, 400, and/or 500 described herein may be manufactured or formed using any suitable process. Certain aspects and features of the fluid sprayers 100, 200, 300, 400, and/or 500 in the present invention may be formed by using, for example, an additive manufacturing process such as a 3D printing process. The use of additive manufacturing allows fluid sprayers 100, 200, 300, 400, and/or 500 to be formed integrally, as a single monolithic component, to include a unitary body. In particular, the additive manufacturing process allows fluid sprayers 100, 200, 300, 400, and/or 500 to be formed with a unitary body that includes a variety of integrated features, such as bends or nozzles. In other embodiments, the fluid sprayers 100, 200, 300, 400, and/or 500 include a number of unitary sub-components that are assembled to form the fluid sprayer.

With reference to FIG. 7, there is illustrated a flow diagram of an example procedure 600 for manufacturing one or more of the fluid sprayer embodiments described in FIGS. 2-6. Procedure 600 begins at start operation 602 and proceeds at operation 604 that includes depositing layers of additive material. For example, the additive material can be deposited on a bed of an additive manufacturing machine or other system.

From operation 604, procedure 600 continues at operation 606 to fuse or bind at least a portion of the additive material to form the fluid sprayer. In an embodiment, energy is directed energy from an energy source onto the layer of additive material to fuse the additive material and form the unitary body of the fluid sprayer. In an embodiment, layers of additive material are bound together with a liquid binding agent to bind the additive material and form the unitary body of the fluid sprayer.

In an embodiment of method 600, the unitary body 104, 204, 404 includes at least one bend 116, 118, 216, 218, 416, 418 that is additively manufactured along the unitary body 104, 204, 404 along with a fluid passage 106, 206, 406 in the unitary body 104, 204, 404 that extends between a mounting portion 112, 212, 412 at a first end 108, 208, 408 of the unitary body 104, 204, 404 and a nozzle proximate to a second end 110, 210, 410 of the unitary body 104, 204, 404. In an embodiment of method 600, the unitary body 304, 504 includes at least one additively manufactured orifice 324, 530, 532 that is in fluid communication with a fluid passage 306, 506 of the unitary body 304, 504.

As used herein, the term "additive manufacturing" refers generally to manufacturing processes where successive layers of material(s) are provided on each other to "build-up," layer-by-layer, a three-dimensional component. The successive layers generally fuse together to form a monolithic component which may be a fluid sprayer, or to form one or more integral sub-components connected together to form a fluid sprayer.

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, the methods and structures disclosed herein may be practiced with any additive manufacturing technique or manufacturing technology. For example, embodiments of the present invention may use layer-additive processes, layer-subtractive processes, or hybrid processes.

Suitable additive manufacturing techniques in accordance with the present invention include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

In addition to using a direct metal laser sintering (DMLS) or direct metal laser melting (DMLM) process where an energy source is used to selectively sinter or melt portions of a layer of powder, it shall be appreciated that according to alternative embodiments, the additive manufacturing process may be a "binder jetting" process. Binder jetting involves successively depositing layers of additive powder in a similar manner as described above. However, instead of using an energy source to generate an energy beam to selectively melt or fuse the additive powders, binder jetting involves selectively depositing a liquid binding agent onto each layer of powder. The liquid binding agent may be, for example, a photo-curable polymer or another liquid bonding agent. The binder jetted piece, produced by metallic powder feedstock, is then placed in a sintering furnace to burn out the binder agent and density the metal powder through necking. Other suitable additive manufacturing methods and variants are intended to be within the scope of the present subject matter.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form. More specifically, according to exemplary embodiments of the present invention, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, iron, iron alloys, stainless steel, and nickel or cobalt based super alloys.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein may be constructed entirely by additive manufacturing processes in certain embodiments, it shall be appreciated that in alternate embodiments, all or a portion of these components may be formed via casting, machining, and/or any other suitable manufacturing process. Any suitable combination of materials and manufacturing methods may be used to form these components.

Further written description of a number of example embodiments shall now be provided. One example embodiment is a fluid sprayer for a powertrain. The fluid sprayer includes a unitary body that forms a fluid passage therein extending from an inlet at a first end of the unitary body to a nozzle at or near a second end of the unitary body opposite the first end. The unitary body includes a mounting portion at the first end of the unitary body opposite the second end for connection with a fluid system of the internal combustion engine. The unitary body includes a number of bends between the nozzle and the mounting portion.

In certain forms of the foregoing embodiment, the unitary body includes first, second, and third body portions. The first body portion extends from the mounting portion to a first bend, the second body portion extends from the first bend to a second bend, and the third body portion extends from the second bend to the second end.

In an embodiment, the first body portion extends in a first direction, the second body portion extends in a second direction that is orthogonal to the first direction, and the third body portion extends in a third direction that is orthogonal to the first direction and the second direction. In an embodiment, the nozzle is formed by an elongated opening that extends along the third body portion.

In an embodiment, the nozzle is configured to produce a fanned shaped fluid spray. In an embodiment, the fluid passage is configured to supply fluid from the fluid system to a gear mesh via the nozzle.

In an embodiment, the mounting portion includes a flange extending laterally outwardly from the unity body. The flange includes a mounting surface configured to be mounted to the internal combustion engine. In an embodiment, the mounting flange includes a through-hole configured to receive a fastener. In an embodiment, a fillet connects the mounting flange and the unitary body.

In an embodiment, the mounting portion includes a circumferential groove configured to receives a sealing ring. In an embodiment, the unitary body includes an outer diameter that varies between the first and the second end. In an embodiment, the outer diameter tapers in a direction from the first end toward the second end along a portion of a length of the unitary body.

Another example embodiment of a fluid sprayer for a powertrain includes a unitary body with an elongated sidewall defining a fluid passage therein. The unitary body includes a mounting portion at a first end of the unitary body and a nozzle proximate to a second end of the unitary body that is opposite the first end. The fluid passage extends from the mounting portion to the nozzle. The fluid passage is defined by an inner surface of the sidewall and the nozzle includes an orifice defined by a depression in the inner surface of the sidewall and an elongated opening in the sidewall in fluid communication with the depression.

In an embodiment, the nozzle includes an elongated protrusion extending laterally outwardly from sidewall of the unitary body. In an embodiment, the elongated opening is formed by a slot that extends lengthwise along the elongated protrusion.

In an embodiment, the depression forms a hemi-spherical transition from the fluid passage to the elongated opening.

In an embodiment, the unitary body is straight from the first end to the second end. In an embodiment, the fluid passage is closed by the second end of the unitary body.

Another example embodiment of a fluid sprayer for a powertrain includes a unitary body including an elongated sidewall. The elongated sidewall defines a fluid passage in the unitary body, and the unitary body extends between a first end and an opposite second end. A mounting portion is provided at the first end of the unitary body, and a nozzle is proximate to the second end of the unitary body. The fluid passage extends from the mounting portion to the nozzle. The nozzle includes at least a first orifice and a second orifice, and the first orifice is configured to produce a first fluid output and the second orifice is configured to produce a second fluid output that differs from the first fluid output.

In an embodiment, the first fluid output and the second fluid output are spray patterns selected from a fan spray pattern, a jet spray pattern, a mist spray pattern, and a drip spray pattern. In an embodiment, the first fluid output and the second fluid output are different fluid flow rates from the first orifice and the second orifice. In an embodiment, the first fluid output and the second fluid output are different fluid flow velocities from the first orifice and the second orifice.

According to another embodiment, a method of manufacturing a fluid sprayer includes depositing layers of additive material and fusing or binding at least a portion of the layers of additive material into a unitary body with at least one additively manufactured bend along the unitary body and with a fluid passage in the unitary body that extends between a mounting portion at a first end of the unitary body and a nozzle proximate to a second end of the unitary body.

According to another embodiment, a method of manufacturing a fluid sprayer includes depositing layers of additive material and fusing or binding at least a portion of the layers of additive material into a unitary body that includes at least one additively manufactured orifice in the unitary body that is in fluid communication with a fluid passage of the unitary body.

While illustrative embodiments of the invention have been illustrated and described in detail in the drawings and foregoing description, the same is to be considered as illustrative and not restrictive in character, it being understood that only certain exemplary embodiments have been shown and described and that all changes and modifications that come within the spirit of the claimed inventions are desired to be protected. It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A fluid sprayer for a powertrain, the fluid sprayer (100, 200, 300, 400, 500) comprising:
a unitary body (104, 204, 304, 404, 504) including an elongated sidewall (102, 202, 302, 402, 502) , the elongated sidewall (102, 202, 302, 402, 502) including an inner surface that defines a fluid passage (106, 206, 306, 406, 506) in the unitary body, the unitary body extending between a first end (108, 208, 308, 408, 508) and an opposite second end (110, 210, 310, 410, 510);
a mounting portion (112, 212, 312, 412, 512) at the first end of the unitary body; and
a nozzle (114, 214, 314, 414, 514) proximate to the second end of the unitary body, the fluid passage extending from the mounting portion to the nozzle, **characterized in that** the nozzle includes a first orifice defined by:
a depression (322) in the inner surface of the sidewall; and
an elongated opening (136, 326) in the sidewall in fluid communication with the depression, wherein the depression forms a semi-spherical transition from the fluid passage to the elongated opening.

2. The fluid sprayer of claim 1, wherein the nozzle (114, 214, 314, 414, 514) includes an elongated protrusion (330) extending laterally outwardly from sidewall (102, 202, 302, 402, 502) of the unitary body (104, 204, 304, 404, 504).

3. The fluid sprayer of claim 1 or claim 2, wherein the elongated opening (136, 326) is a slot that extends lengthwise along the elongated protrusion (330)..

4. The fluid sprayer of any preceding claim, wherein the unitary body (104, 204, 304, 404, 504) is straight from the first end (108, 208, 308, 408, 508) to the second end (110, 210, 310, 410, 510).

5. The fluid sprayer of any preceding claim, wherein the fluid passage (106, 206, 306, 406, 506) is closed by the second end (110, 210, 310, 410, 510) of the unitary body (104, 204, 304, 404, 504).

6. The fluid sprayer of any preceding claim, wherein the nozzle includes at least the first orifice and a second orifice, and the first orifice is configured to produce a first fluid output and the second orifice is configured to produce a second fluid output that differs from the first fluid output.

7. The fluid sprayer of claim 6, wherein the first fluid output and the second fluid output are spray patterns selected from: a fan spray pattern, a jet spray pattern, and a drip spray pattern.

8. The fluid sprayer of claim 6 or claim 7, wherein the first fluid output and the second fluid output are different fluid flow rates from the first orifice and the second orifice.

9. The fluid sprayer any of claims 6 to 8, wherein the first fluid output and the second fluid output are different fluid flow velocities from the first orifice and the second orifice.

## Patentansprüche

1. Fluidzerstäuber für einen Antriebsstrang, wobei der Fluidzerstäuber (100, 200, 300, 400, 500) umfasst:
einen einteiligen Körper (104, 204, 304, 404, 504), der eine längliche Seitenwand (102, 202, 302, 402, 502) beinhaltet, wobei die längliche Seitenwand (102, 202, 302, 402, 502) eine Innenoberfläche beinhaltet, die einen Fluiddurchgang (106, 206, 306, 406, 506) in dem einteiligen Körper definiert, wobei sich der einteiligen Körper zwischen einem ersten Ende (108, 208, 308, 408, 508) und einem gegenüberliegenden zweiten Ende (110, 210, 310, 410, 510) erstreckt;
einen Montageabschnitt (112, 212, 312, 412, 512) am ersten Ende des einteiligen Körpers; und
eine Düse (114, 214, 314, 414, 514) in der Nähe des zweiten Endes des einteiligen Körpers, wobei sich der Fluiddurchgang vom Montageabschnitt zur Düse erstreckt, **dadurch gekennzeichnet, dass** die Düse eine erste Öffnung beinhaltet, definiert durch:
eine Vertiefung (322) in der Innenoberfläche der Seitenwand; und
eine längliche Öffnung (136, 326) in der Seitenwand in strömungstechnischer Kommunikation mit der Vertiefung, wobei die Vertiefung einen halbkugelförmigen Übergang vom Fluiddurchgang zur länglichen Öffnung bildet.

2. Fluidzerstäuber nach Anspruch 1, wobei die Düse (114, 214, 314, 414, 514) einen länglichen Vorsprung (330) beinhaltet, der sich seitlich von einer Seitenwand (102, 202, 302, 402, 502) des einteiligen Körpers (104, 204, 304, 404, 504) nach außen erstreckt.

3. Fluidzerstäuber nach Anspruch 1 oder Anspruch 2, wobei die längliche Öffnung (136, 326) ein Schlitz ist, der sich in Längsrichtung entlang des länglichen Vorsprungs (330) erstreckt.

4. Fluidzerstäuber nach einem vorstehenden Anspruch, wobei der einteilige Körper (104, 204, 304, 404, 504) von dem ersten Ende (108, 208, 308, 408, 508) bis zum zweiten Ende (110, 210, 310, 410, 510) gerade ist.

5. Fluidzerstäuber nach einem vorstehenden Anspruch, wobei der Fluiddurchgang (106, 206, 306, 406, 506) durch das zweite Ende (110, 210, 310, 410, 510) des einteiligen Körpers (104, 204, 304, 404, 504) verschlossen ist.

6. Fluidzerstäuber nach einem vorstehenden Anspruch, wobei die Düse mindestens eine erste Öffnung und eine zweite Öffnung beinhaltet, und die erste Öffnung konfiguriert ist, um einen ersten Fluidausstoß zu erzeugen, und die zweite Öffnung konfiguriert ist, um einen zweiten Fluidausstoß zu erzeugen, der sich vom ersten Fluidausstoß unterscheidet.

7. Fluidzerstäuber nach Anspruch 6, wobei der erste Fluidausstoß und der zweite Fluidausstoß Sprühmuster sind, die ausgewählt sind aus: einem Fächersprühmuster, einem Strahlsprühmuster und einem Tropfsprühmuster.

8. Fluidzerstäuber nach Anspruch 6 oder Anspruch 7, wobei der erste Fluidausstoß und der zweite Fluidausstoß unterschiedliche Fluidvolumenströme aus der ersten Öffnung und der zweiten Öffnung sind.

9. Fluidzerstäuber nach einem der Ansprüche 6 bis 8, wobei der erste Fluidausstoß und der zweite Fluidausstoß unterschiedliche Fluidstromgeschwindigkeiten aus der ersten Öffnung und der zweiten Öffnung sind.

## Revendications

1. Pulvérisateur de fluide pour un groupe motopropulseur, le pulvérisateur de fluide (100, 200, 300, 400, 500) comprenant :
un corps unitaire (104, 204, 304, 404, 504) incluant une paroi latérale allongée (102, 202, 302, 402, 502), la paroi latérale allongée (102, 202, 302, 402, 502) incluant une surface intérieure qui définit un passage de fluide (106, 206, 306, 406, 506) dans le corps unitaire, le corps unitaire s'étendant entre une première extrémité (108, 208, 308, 408, 508) et une seconde extrémité opposée (110, 210, 310, 410, 510) ;
une partie de montage (112, 212, 312, 412, 512) au niveau de la première extrémité du corps unitaire ; et
une buse (114, 214, 314, 414, 514) à proximité de la seconde extrémité du corps unitaire, le passage de fluide s'étendant de la partie de montage à la buse, **caractérisé en ce que** la buse comprend un premier orifice défini par :
un enfoncement (322) dans la surface intérieure de la paroi latérale ; et
une ouverture allongée (136, 326) dans la paroi latérale en communication fluidique avec l'enfoncement, dans lequel l'enfoncement forme une transition semi-sphérique du passage de fluide à l'ouverture allongée.

2. Pulvérisateur de fluide selon la revendication 1, dans lequel la buse (114, 214, 314, 414, 514) inclut une protubérance allongée (330) s'étendant latéralement vers l'extérieur à partir de la paroi latérale (102, 202, 302, 402, 502) du corps unitaire (104, 204, 304, 404, 504).

3. Pulvérisateur de fluide selon la revendication 1 ou la revendication 2, dans lequel l'ouverture allongée (136, 326) est une fente qui s'étend longitudinalement le long de la protubérance allongée (330).

4. Pulvérisateur de fluide selon une quelconque revendication précédente, dans lequel le corps unitaire (104, 204, 304, 404, 504) est droit de la première extrémité (108, 208, 308, 408, 508) à la seconde extrémité (110, 210, 310, 410, 510).

5. Pulvérisateur de fluide selon une quelconque revendication précédente, dans lequel le passage de fluide (106, 206, 306, 406, 506) est fermé par la seconde extrémité (110, 210, 310, 410, 510) du corps unitaire (104, 204, 304, 404, 504).

6. Pulvérisateur de fluide selon une quelconque revendication précédente, dans lequel la buse inclut au moins le premier orifice et un second orifice, et le premier orifice est configuré pour produire une première sortie de fluide et le second orifice est configuré pour produire une seconde sortie de fluide qui diffère de la première sortie de fluide.

7. Pulvérisateur de fluide selon la revendication 6, dans lequel la première sortie de fluide et la seconde sortie de fluide sont des motifs de pulvérisation choisis parmi : un motif de pulvérisation en éventail, un motif de pulvérisation en jet et un motif de pulvérisation goutte à goutte.

8. Pulvérisateur de fluide selon la revendication 6 ou la revendication 7, dans lequel la première sortie de fluide et la seconde sortie de fluide sont des débits d'écoulement de fluide différents à partir du premier orifice et du second orifice.

9. Pulvérisateur de fluide selon l'une quelconque des revendications 6 à 8, dans lequel la première sortie de fluide et la seconde sortie de fluide sont des vitesses d'écoulement de fluide différentes à partir du premier orifice et du second orifice.
